# EUROPÄISCHE PATENTSCHRIFT

(11) **EP 3 823 819 B1**
(45) Veröffentlichungstag und Bekanntmachung des Hinweises auf die Patenterteilung: **21.02.2024**
(21) Anmeldenummer: 18746118.1
(22) Anmeldetag: 17.07.2018
(51) Int. Cl.: B29C 73/16

(54) **VORRICHTUNG ZUM ABDICHTEN VON LUFTREIFEN**
DEVICE FOR SEALING PNEUMATIC TIRES
DISPOSITIF DESTINÉ À ÉTANCHÉIFIER DES PNEUMATIQUES

(43) Veröffentlichungstag der Anmeldung: 26.05.2021
(73) Patentinhaber: Aircom Automotive Sp. z.o.o. Sp. K., 55-080 Pietrzykowice (PL)
(72) Erfinder: GSCHWENDER, Dominik, 8266 Steckborn (CH); JESKOWIAK, Jakub, 55-340 UJAZD GÓRNY (PL)
(74) Vertreter: DREISS Patentanwälte PartG mbB
(86) Internationale Anmeldenummer: PCT/EP2018/069438
(87) Internationale Veröffentlichungsnummer: WO 2020/015826

(56) Entgegenhaltungen:
- DE-A1-102004 009 299
- DE-A1-102007 015 833
- DE-A1-102007 026 776
- DE-A1-102016 209 302
- US-A1- 2008 098 855
- US-B1- 6 605 654

## Beschreibung

Die Erfindung betrifft eine Vorrichtung zum Abdichten von Luftreifen mittels Dichtflüssigkeit, umfassend einen Dichtflüssigkeitsbehälter mit einer Lufteinlassöffnung zum Anschluss an einen Kompressor und einer Auslassöffnung zum Austritt eines Luft-/Dichtflüssigkeitsgemisches in einen abzudichtenden Luftreifen.

Reifendichtmittel werden seit langem in Luftreifen verwendet, da die Verwendung von Reservereifen aus Platzgründen aber auch aufgrund der nur selten auftretenden Schäden an Reifen nicht mehr wie früher rentabel und sinnvoll erscheint. Diese Reifendichtmittel sind normalerweise für die kurzzeitige Reparatur von Reifen-Notfällen gedacht, in denen ein Loch oder ein Riss oder eine Öffnung in einer Lauffläche und Wand eines Reifens auftritt. Die Reifendichtmittel werden durch das Reifenventil eingefüllt und verschließen das Loch oder die Öffnung provisorisch. Der Reifen wird dann ausgetauscht.

Übliche Reifendichtmittel basieren auf einer Latex-Kautschuk-Grundsubstanz. Sie bilden im Reifen eine gummiähnliche Masse. Latexreste lassen sich darüber hinaus nur schwer wieder aus einem Reifen entfernen. Darüber hinaus müssen die gewechselten Reifen als Sondermüll entsorgt werden. Durch die klebrige Konsistenz verschmutzen die Anlagen beim Reifenwechsel stark und können nur aufwendig wieder gereinigt werden.

Weiterhin wird die Umwelt durch dieses Produkt belastet. Schließlich sind die Beschaffungskosten sehr hohen Marktschwankungen ausgesetzt, da es sich um ein begrenzt verfügbares Naturprodukt handelt.

Dabei sind für die Anwendung im Wesentlichen zwei Systeme bekannt, nämlich ein "Standardsystem" bei dem eine Dichtflüssigkeit in einem komprimierbaren Behälter, wie z.B. einer komprimierbare Plastikflasche oder einem Beutel vorgesehen sein kann und manuell durch Zusammendrücken des komprimierbaren Behälters die Dichtflüssigkeit in den Reifen eingepresst wird. Die Abdichtung erfolgt dann sowohl mechanisch durch "Verstopfen" als durch Koagulation in der Öffnung, wobei dies unter Mitwirkung einer chemischen Reaktion der Dichtflüssigkeit erfolgt. Der Behälter wird dabei über einen Schlauch an dem Reifenventil angeschlossen. Durch nachfolgendes Aufpumpen des Reifens sowie die Dreh- und Walkbewegung beim Fahren wird die Dichtwirkung weiter verstärkt.

Weiterhin bestehen sogenannte "Komfortsysteme" bei denen der Dichtflüssigkeitsbehälter an einen Kompressor angeschlossen wird, der z.B. über einen Anschluss im Fahrzeug betrieben werden kann. Die Dichtflüssigkeit wird dann durch den Luftstrom mitgenommen und zur Schadstelle gebracht. Die Abdichtung erfolgt dann wie beschrieben. Eine Dichtflüssigkeit ist beispielsweise aus der US 4,337,322 bekannt, die unter anderem neben weiteren Komponenten einen Latexanteil enthält.

Darüber hinaus sind eine Mehrzahl von Latex-freien Dichtflüssigkeiten bekannt, z.B. aus der DE 10 2011 115 856 A1.

DE 10 2004 009299 A1 offenbart eine Vorrichtung gemäß dem Oberbegriff des Anspruchs 1.

Um eine Abdichtung sicher zu gewährleisten wird daher bisher bei Dichtflüssigkeiten auf Latexbasis zumeist ein Latexanteil über 50 Gew.-% gewählt, damit eine Gebrauchsfähigkeit entsprechend den Anforderungen über den geforderten Temperaturbereich bereitgestellt werden kann. Darüber hinaus sind dafür genaue Mischungsverhältnisse notwendig, was zusätzlichen Aufwand erzeugt.

Die Erfindung stellt sich nun die Aufgabe, eine Vorrichtung bereitzustellen, die die genannten Probleme vermeidet und insbesondere die einzusetzende Latexmenge reduziert.

Diese Aufgabe wir gelöst durch eine Vorrichtung mit den Merkmalen des Anspruchs 1, bei der der Dichtflüssigkeitsbehälter mindestens zwei Kammern aufweist, in denen miteinander reaktionsfähige Komponenten der Dichtflüssigkeit getrennt gelagert sind, wobei die Kammern über ein Verbindungselement, z.B. ein Ventil voneinander getrennt sind, das über einen anliegenden Druck vom Kompressor und/oder einen Luftstrom von der Lufteinlassöffnung zur Auslassöffnung öffenbar ist. Das heißt, sobald ein hinreichender, vorgegebener Druck anliegt, öffnet das Verbindungselement, z.B. das Ventil und die Luft strömt von der einen Kammer durch das Verbindungselement in die zweite Kammer und von dort weiter in den Reifen, wobei die beiden Komponenten miteinander gemischt werden. Hierdurch wird erreicht, dass die miteinander reaktionsfähigen Bestandteile der Dichtflüssigkeit erst im Einsatzfall miteinander in Kontakt kommen und keine vorzeitige Reaktion erfolgt, die dann die Reaktion im Verwendungsfall vorweg nehmen würde.

Um sicherzustellen, dass auch nach Jahren im Einsatzfall noch hinreichende Mengen der reagierenden Komponenten vorhanden sind, mussten diese in der Vergangenheit im Stand der Technik in größerer Menge zugesetzt. Auf der anderen Seite war, um eine sichere Reaktion zu gewährleisten ein genaues Mischungsverhältnis einzuhalten. Durch die nun bestehende Trennung der Komponenten kann der Anteil der reagierenden Komponenten herabgesetzt werden. Als reagierende Komponenten ist hier insbesondere Latex-Naturkautschuk vorgesehen, dessen Einsatz in der Vergangenheit insbesondere auch aufgrund des benötigten Anteils für Beschaffungsprobleme gesorgt hat. Die Kammern sind dabei durch ein Ventil getrennt, das durch die einströmende Luft geöffnet wird und dabei die Komponenten mischt und in den Reifen einträgt. Das Ventil kann dabei alternativ als ein zerstörbarer Verschluss vorgesehen sein, z.B. eine mit einer Sollbruchstelle versehene Folie oder Membran, die dann durch den Luftstrom zerstört oder durch mechanische Betätigung und damit geöffnet wird.

Nach einem bevorzugten Ausführungsbeispiel beträgt der Latex-Naturkautschuk-Anteil weniger als 50 Gew.-%, insbesondere weniger als 40 Gew.-%, insbesondere weniger als 30 Gew-% und insbesondere weniger als 25 Gew.-%. Der Latex-Anteil kann daher deutlich unter dem im Stand der Technik vorgesehenen Anteil liegen, so dass die durch das Latex entstehenden Probleme reduziert werden können.

Die Begriffe Dichtflüssigkeit sowie Dichtmittel sind vorliegend Synonyme. Unter Flüssigkeit sollen dabei sowohl wässrige als auch viskose Flüssigkeiten oder Gele verstanden werden.

Nach einer weiter bevorzugten Ausführungsform kann vorgesehen sein, dass die Dichtflüssigkeit mineralische und/oder synthetisches Fasern und/oder Partikel umfasst. Diese Partikel oder Fasern können das Verschließen einer Öffnung weiter fördern. Dies erfolgt indem sie sich in der Öffnung, mit dem die Öffnung umgebenden Material und miteinander verhaken. Das Latex-Material unterstützt diesen Vorgang.

Weitere Bestandteile der Dichtflüssigkeit können Schaumadditive und/oder Verdampfungsmittel sein. Diese können für die Verteilung sowie die Koagulation und das Verschließen der Öffnung einen Beitrag leisten.

Besonders vorteilhaft ist es, wenn der Dichtflüssigkeitsbehälter mit seiner Lufteinlassöffnung unmittelbar mit einem Luftauslass eines Kompressors koppelbar ist. Auf diese Weise kann eine stabile und wertig erscheinende Verbindung bereitgestellt werden und insbesondere kann auf den Aufwand weiterer Verbindungsteile verzichtet werden. Bevorzugt kann der Dichtflüssigkeitsbehälter in Gebrauchsrichtung auf dem Kompressor anordenbar sein. Dabei ist die Luftaustrittsöffnung des Kompressors an dessen Oberseite vorgesehen und die Lufteintrittsöffnung des Dichtflüssigkeitsbehälters an dessen Unterseite. Auf diese Weise kann die Strecke, die mittels einer Anschlusseinrichtung oder eines Anschlussmittels, insbesondere eines Anschlussschlauchs bis zum Reifenventil zu überbrücken ist, verkürzt werden. Besonders vorteilhaft ist es, wenn die Auslassöffnung des Dichtflüssigkeitsbehälters an dessen Oberseite in der Gebrauchsposition vorgesehen ist.

Bevorzugt ist weiterhin, dass die Auslassöffnung des Dichtmittelbehälters mit einem zerstörbaren Verschluss verschlossen ist. Die Zerstörung kann dabei durch einen anliegenden Druck und/oder den Luftstrom und/oder ein Anschlussmittel zum Verbinden mit dem Luftreifen erfolgen. Vorteilhaft kann vorgesehen sein, dass der zerstörte Verschluss so fixiert wird, dass er nicht in den Luftweg hineinragt und damit den Füllvorgang behindert. Auf diese Weise ist der Dichtflüssigkeitsbehälter im Lagerungszustand dicht verschlossen und kann im Anwendungsfall einfach geöffnet werden. Dazu kann vorgesehen sein, dass der Verschluss eine Sollbruchstelle aufweist, um ein Öffnen bei einem definierten Druck auf den Verschluss sicherzustellen.

Nach einem weiteren bevorzugten Ausführungsbeispiel kann vorgesehen sein, dass die Lufteinlassöffnung ein Ventil aufweist, das sich durch die Lufteinströmung aus dem Kompressor in den Dichtflüssigkeitsbehälter öffnet und sich nach dem Füllvorgang selbsttätig verschließt, wenn der Kompressor abgeschaltet wird. Das Ventil kann dabei so ausgebildet sein, dass es sich bei Beaufschlagung mit Druckluft verformt und so einen Weg freigibt, der sich nach Einbringen der Luft in den Dichtflüssigkeitsbehälter wieder durch elastische Rückverformung verschließt. Alternativ ist auch eine Gestaltung denkbar, bei der das Ventil durch Verschiebung eines Ventilelementes einen Weg freigibt und bei Rückbewegung, sofern der Luftstrom endet, die Öffnung wieder verschließt oder sich nach Ende des Luftstroms verformt, um ein Austreten von Dichtflüssigkeit sicher zu verhindern.

Besonders bevorzugt kann weiterhin vorgesehen sein, dass eine Luftführung im Inneren des Kompressors so ausgebildet ist, dass die sehr hohe Lufttemperatur am Ausgang des Zylinders des Kompressors reduziert wird. Sofern die Lufttemperatur beim Eintritt in den Dichtflüssigkeitsbehälter eher niedrig ist, wird die Gefahr einer Vorabreaktion, vor allem bei Durchgang der Dichtflüssigkeit durch die Kopplung z.B. von einem Schlauch zum Reifenventil und insbesondere Probleme beim Durchgang durch das Reifenventil verhindert. Eine solche Kühleinrichtung im Kompressor kann beispielsweise durch verschiedene Kühlflächengeometrien beziehungsweise Kanäle im Innenraum des Kompressors sowie eine entsprechend angepasste äußere Formgebung des Kompressors erreicht werden, wobei die Luft durch diese Kühleinrichtung durchgeleitet wird.

Weiterhin ist es besonders vorteilhaft, dass eine Temperaturreduzierung der Luft am Kompressorausgang dazu führt, dass ein Schlauchmaterial zur Kopplung entweder des Dichtflüssigkeitsbehältnisses mit dem Kompressor und/oder des Dichtflüssigkeitsbehältnisses mit dem Reifen weniger temperaturstabil ausgebildet sein muss, wodurch Materialien verwendet werden können, welche bedingt durch den Produktionsprozess wesentlich genauer und mit dünneren Wänden hergestellt werden können. Darüber hinaus wird durch ein - dann mögliches - dünneres flexibleres Schlauchmaterial die Unterbringung des Schlauchs oder einer anderen Anschlusseinrichtung erleichtert. Darüber hinaus kühlt der verwendete Schlauch oder die Anschlusseinrichtung auch schneller ab. In Stand der Technik sind hierbei sowohl Silikon- als auch Naturkautschukschläuche mit Gewebeummantelung bekannt, die nun verbessert werden können.

Besonders bevorzugt sind weiterhin wenn, die Dichtflüssigkeitsbehälter als Spritzgussteil hergestellt wird. Im Stand der Technik werden häufig Blasverfahren zur Herstellung der Kunststoffbehälter verwendet. Mittels Spritzgusstechnik lassen sich jedoch höhere spezifische Festigkeitswerte erzielen, die mit erheblich kleineren Toleranzen hergestellt werden können. Auf diese Weise können die Wandstärken der Behälter reduziert werden, was sowohl zu Kosteneinsparungen als auch zu Gewichtseinsparungen führt.

Schließlich stellt es eine besonders bevorzugte Ausführungsform dar, dass im Zuge der Kopplung von Dichtflüssigkeitsbehälter und Kompressor es zu einer elastischen Verformung, insbesondere auf Seiten des Kompressors kommt, insbesondere einer Gehäusewand des Kompressors, und dass auf diese Weise ein Kraftschluss der Verbindung erreicht wird und damit einer besonderen dichte Verbindung zwischen Dichtflüssigkeitsbehälter und Kompressor erzeugt wird.

Die elastische Verformung kann dabei beispielsweise über eine Bajonettspannführung oder eine Spannrampe und einen Spannzapfen oder -bolzen erfolgen. Das Kompressorgehäuse weist dabei zur Verbindung zwischen Dichtflüssigkeitsbehälter und Kompressor ein Kopplungselement auf, auf das der Dichtflüssigkeitsbehälter mit seiner Lufteinlassöffnung aufgebracht und mit der Luftauslassöffnung des Kompressors verbunden wird. Eine Verbindung kann dabei insbesondere drehend aber auch translatorisch steckend und verrastend erfolgen.

Diese und weitere Merkmale der Erfindung ergeben sich auch aus der nachfolgenden Beschreibung sowie der Zeichnung und den Ansprüchen.

Die Erfindung wird im Folgenden an Hand einer Zeichnung näher erläutert. Dabei zeigen:
- Figur 1: eine Gestaltung gemäß dem Stand der Technik,
- Figur 2: einen Querschnitt durch ein erfindungsgemäßen Dichtflüssigkeitsbehälters,
- Figur 3: eine erste Ausgestaltung einer Kupplung zwischen Dichtflüssigkeitsbehälter und Kompressors,
- Figur 4: eine alternative Ausgestaltung zu Figur 3.
- Figur 5: eine Gestaltung des Kompressors in einer aufgeschnittenen Darstellung.
- Figur 6 und 7: Ausgestaltungen eines Lufteinlassventils des Dichtflüssigkeitsbehälters.

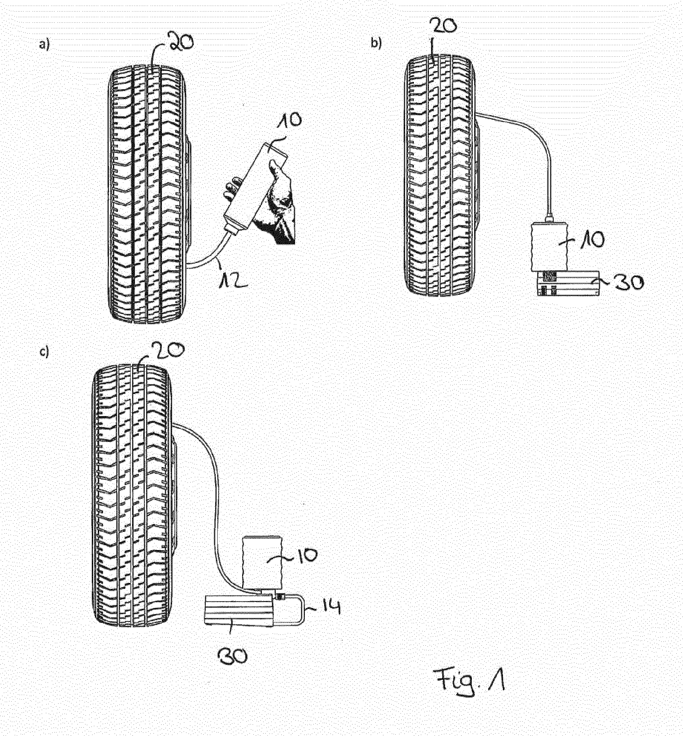

Figur 1 zeigt in drei Darstellungen eine Gestaltung wie sie als Stand der Technik bekannt ist. So ist in Darstellung a das sogenannte Standardsystem mit einem Dichtflüssigkeitsbehälter, der durch Kompression zusammengedrückt wird, so dass die Dichtflüssigkeit über ein Reifenventil in einen Luftreifen 20 eingebracht werden kann. Der Dichtflüssigkeitsbehälter, hier die Dichtmittelflasche ist mit dem Bezugszeichen 10 versehen. Die Verbindung erfolgt durch einen Anschlusseinrichtung 12, hier einen Schlauch, der mit dem Dichtflüssigkeitsbehälter 10 gekoppelt ist und mit seinem zweiten Ende mit dem Reifenventil verbunden werden kann. Als sogenannte Komfortlösungen werden solche verstanden, die in den Abbildungen b und c dargestellt sind, wobei der Dichtflüssigkeitsbehälter 10 in der Darstellung b unmittelbar mit einem Kompressor 30 koppelbar ist und in dem in Darstellung c gezeigte System über ein weiteres Verbindungselement 14 mit dem Kompressor 30 verbunden werden kann. Die in den Darstellungen B und C gezeigten Systeme erfordern dabei weniger Kraft seitens des Anwenders, sondern der Eintrag der Dichtflüssigkeit sowie der zusätzlichen Luft zu Verteilung erfolgt über einen Kompressor, wobei die Druckluft durch den Dichtflüssigkeitsbehälter 10 hindurchgeleitet wird.

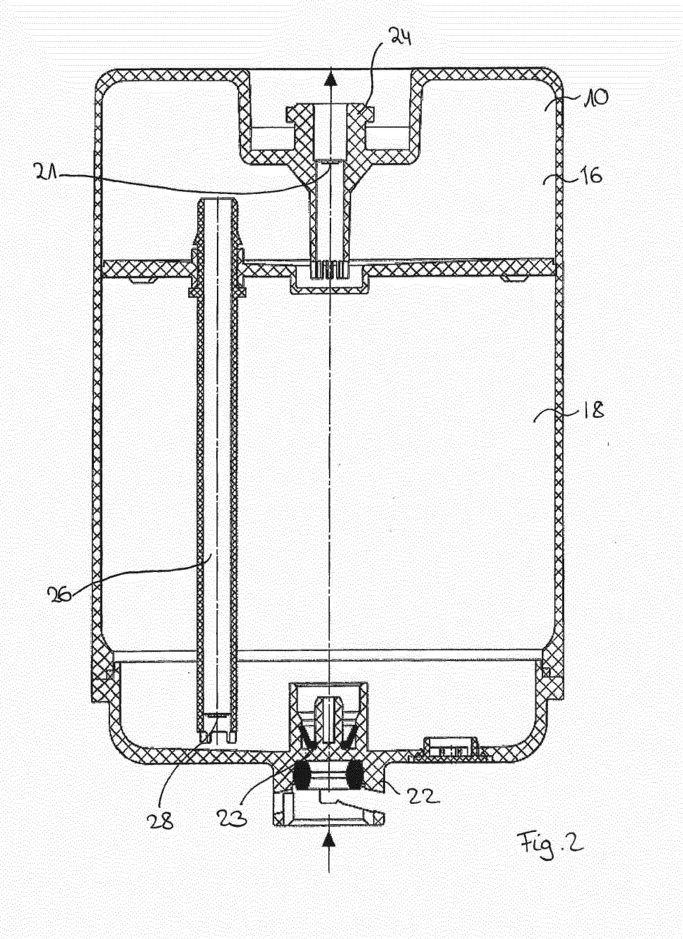

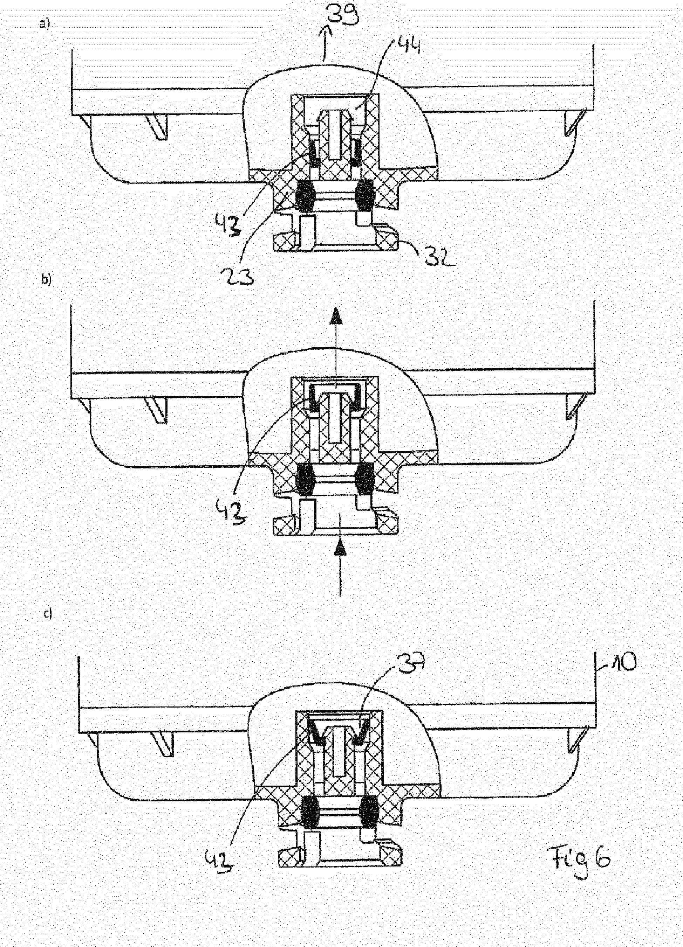

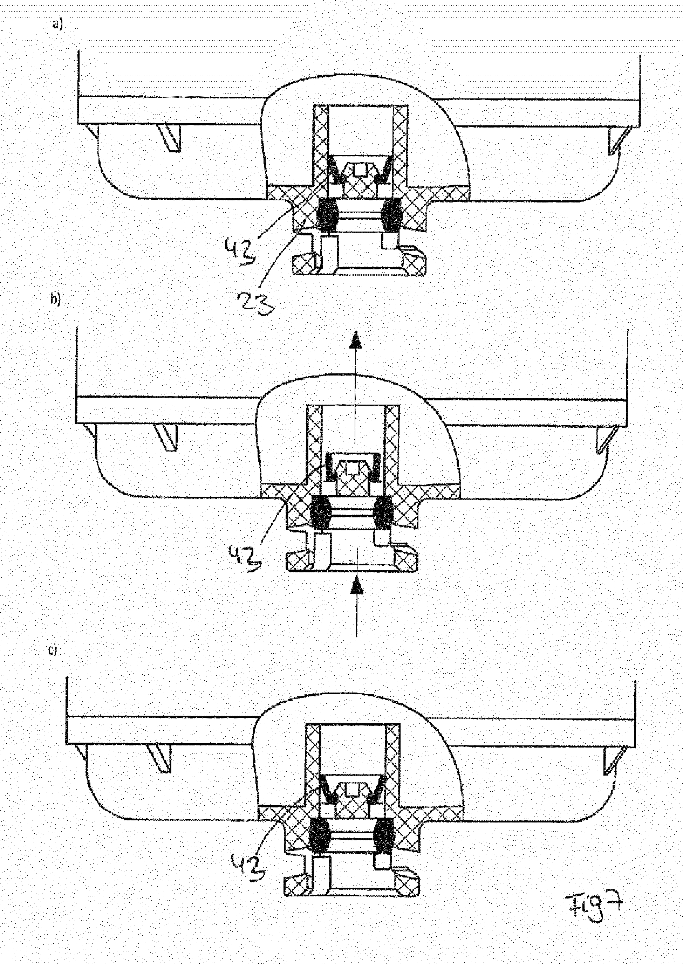

Figur 2 zeigt nun die erfindungsgemäße Ausgestaltung des Dichtflüssigkeitsbehälters 10, der hier zwei Kammern 16 und 18 geteilt ist. Die beiden Kammern 16,18 enthalten verschiedene Komponenten der Dichtflüssigkeit, nämlich im vorliegenden Fall in der Kammer 16 die Latex-Naturkautschukkomponente sowie sämtliche weiteren Komponenten der Dichtflüssigkeit in der mit 18 bezeichneten Kammer. Alternativ kann die Latex-Naturkautschukkomponente auch in der Kammer 18 angeordnet sein und die anderen Komponenten in der Kammer 16. Auf diese Weise können zum einen Komponenten, insbesondere Latex eingespart werden und es kann ein optimaleres Mischungsverhältnis verwendet werden, dass im Anwendungsfall eine intensivere Reaktion bereitzustellen vermag, die dann eine bessere Abdichtung gewährleisten. Insbesondere kann durch die getrennte Lagerung der Komponenten eine vorzeitige Reaktion verhindert werden, was die Lagerstabilität günstig beeinflusst. Darüber hinaus weist der Dichtflüssigkeitsbehälter 10 eine Lufteinlassöffnung 22 sowie eine Auslassöffnung 24 auf sowie ein Verbindungselement 26 zwischen den Kammern 16 und 18. Das Verbindungselement 26 ist dabei über ein Verschlusselement 28 ebenso wie die Auslassöffnung 24, wobei dort das Verschlusselement mit 21 bezeichnet ist, im Lagerzustand verschlossen. Wird nun ein Kompressor 30 an die Lufteingangsöffnung 22 des Behälters 10 angekoppelt, so tritt die Luft in die Kammer 18 ein und durch den aufgebrachten Druck wird das Verschlusselement 28 zerstört, das hierzu eine entsprechende Sollbruchstelle aufweist. Die eingebrachte Druckluft zusammen mit den in Kammer 18 befindlichen Komponenten der Dichtflüssigkeit treten dann durch das Verbindungselement 26 in die Kammer 16 ein und vermischen sich dort mit dem darin befindlichen Latex. Es wird dann ebenfalls das Verschlusselement 21 entlang seiner Sollbruchstelle zerstört, so dass die Druckluft zusammen mit dem vermischten Komponenten der Dichtflüssigkeit durch die Auslassöffnung 24 in einen Schlauch 12 als Anschlusseinrichtung und über diesen über das Reifenventil in den Reifen 20 eingebracht wird. Die Einlassöffnung 22 mit dem dort vorgesehenen Ventil 23 wird nachfolgend zu den Figuren 6 und 7 noch näher erläutert.

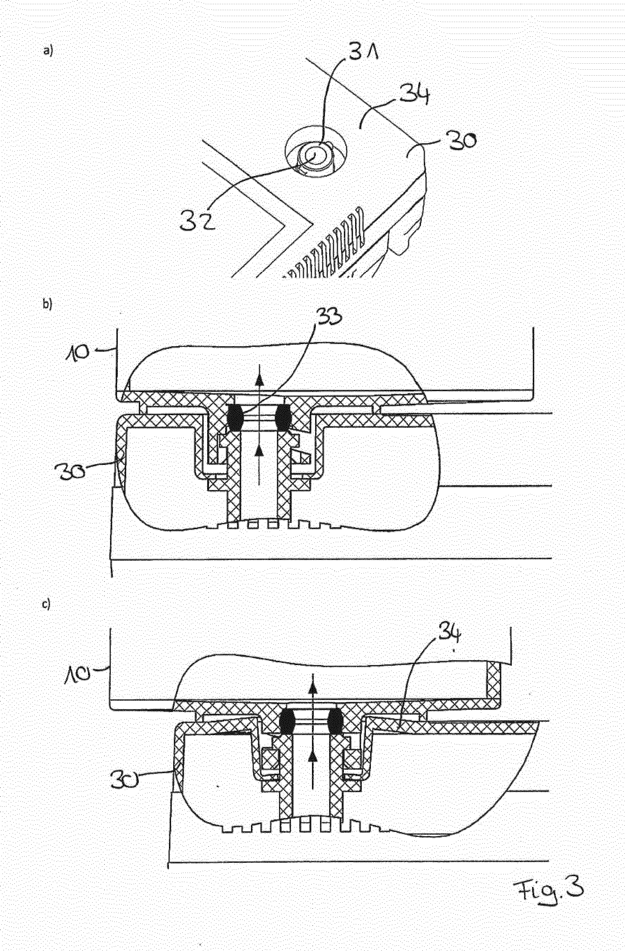

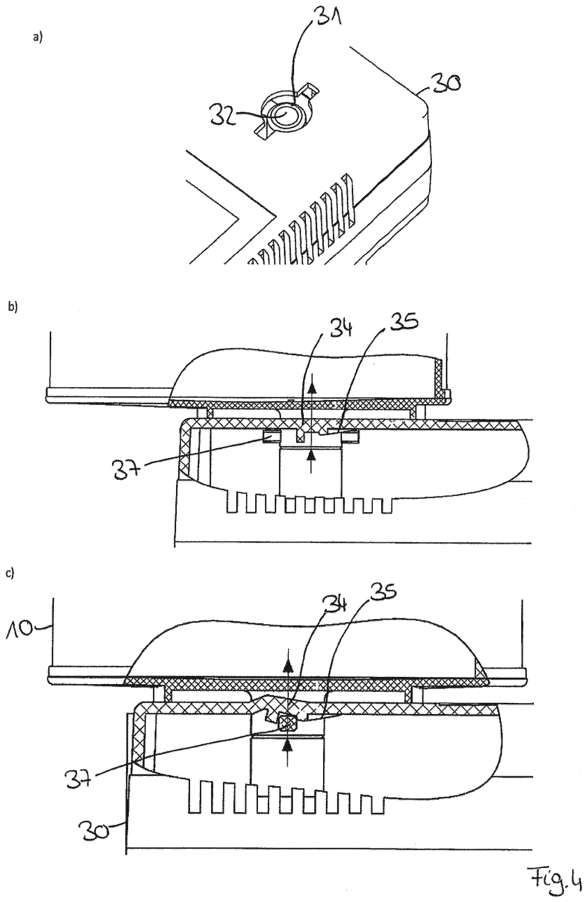

Figur 3 und Figur 4 zeigen nun zwei Möglichkeiten der Kopplung zwischen Kompressor 30, der eine sogenannte Kopplungseinrichtung 31 aufweist, die dem Luftausgang 32 des Kompressors 30 zugeordnet ist, und dem Dichtflüssigkeitsbehälter 10. Dabei ist es wichtig, dass der Dichtflüssigkeitsbehälter 10 und der Kompressor 30 sicher miteinander verbunden werden, um den leckagefreien Eintritt der Druckluft in den Dichtflüssigkeitsbehälter 10 sicher zu stellen und ein Austreten von Dichtflüssigkeit an der Verbindungstelle zu verhindern.

Figur 3 zeigt dabei eine Gestaltung, bei der eine Gehäusewand 34 des Kompressors 30 in der unmittelbaren Umgebung der Kopplungsvorrichtung 31 als Spannfeder dient. Die Darstellung B der Figur 3 zeigt dabei eine nicht gekoppelte Darstellung bei der der Dichtflüssigkeitsbehälter 10 lediglich auf den Kompressor 30 aufgesetzt ist. Dabei liegt die Kopplungvorrichtung 31 gegen eine Dichtung 33 in der Lufteinlassöffnung 22 des Behälters 10 an. Die Verbindung erfolgt nun drehend, das heißt der Behälter 10 wird mittels einer Bajonettspannführung verrastet, wobei es zu einer Durchbiegung der Gehäusewand 34 kommt, so dass sich der Behälter 10 und der Kompressor 30 unter Vorspannung kraftschlüssig miteinander verbinden.

Figur 4 zeigt nun eine alternative Darstellung, mit einer an dem Gehäuse des Kompressors 34 angespritzten Spannrampe 35, so dass bei der rotatorischen Kopplung von Behälter 10 zu Kompressor 30 es zu einer Durchbiegung der Gehäusewand 34 kommt. Diese Spannrampe 35 wirkt dabei mit einem Spannzapfen 37 des Behälters 10 spannend zusammen.

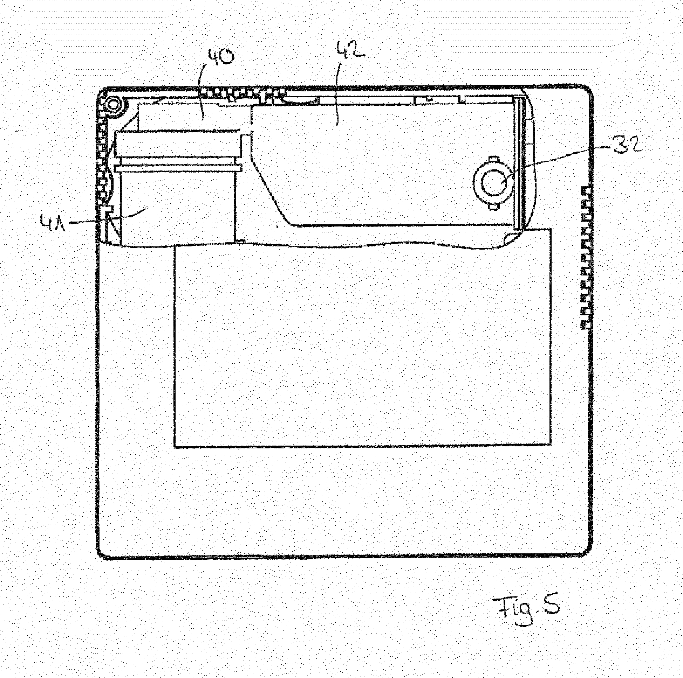

In Figur 5 ist eine aufgeschnittene Darstellung des Kompressors gezeigt. Dabei besteht bei Kompressoren das Problem, dass am Luftausgang 40 des Kompressors auf Grund der Kompression die austretende Luft eine vergleichsweise hohe Temperatur aufweist. Es kann daher erfindungsgemäß vorgesehen sein, die Luft über eine Kühleinrichtung 42 abzukühlen. Eine solche Kühleinrichtung 42 kann beispielsweise in Kühlkanälen oder weiteren Kühlflächengeometrien bestehen, durch die die aus dem Zylinder 41 austretende Luft geführt wird, um diese abzukühlen bis sie dann zum Luftausgang 32 gelangt. Auf diese Weise kann erreicht werden, dass die Reaktion zwischen den beteiligten Komponenten der Dichtflüssigkeit nicht bereits verführt eintritt und insbesondere nicht bereits beim Eintritt durch ein Reifenventil erfolgt und dieses gegebenenfalls verstopft.

In den Figuren 6 und 7 ist nun eine bevorzugte Ausgestaltung des Lufteinlassventils 23 des Dichtflüssigkeitsbehälters 10 gezeigt. Hierbei geht es insbesondere auch um das Zusammenwirken mit dem Luftauslass 32 des Kompressors 30.

So zeigt Figur 6 in der Darstellung a das geschlossene Ventil 23 und in Darstellung b das geöffnete Ventil 23 während des Vorgangs. In Darstellung c ist dann eine verriegelte Stellung nach dem Füllvorgang dargestellt. Wie gut zu erkennen ist, weist das Ventil ein in axialer Richtung 39 verschiebbares Element 43 auf, wobei die Verschiebung durch den eintretenden Luftstrom erfolgt. Das heißt, der Kompressordruck öffnet das Ventil 23 und verschiebt das Element 43 in einen Bereich eines größeren Ventilquerschnitts 44 wie in Darstellung b zu sehen. Durch den anliegenden Druck behält das Element 43 hierbei im wesentlichen seine Form. Bei Beendigung des Füllvorgangs und damit dem Ende des Anliegens eines Kompressionsdrucks kommt es zu einer Verformung des Elements 43, so dass dieses auch den Bereich des größeren Querschnitts 44 dichtend verschließt. Auf diese Weise wird erreicht, dass nach Ende des Füllvorgangs der Dichtflüssigkeit in einen Reifen der Dichtflüssigkeitsbehälter 10 ohne die Gefahr von Austritt von Dichtflüssigkeit vom Kompressor 30 getrennt werden kann.

Eine alternative Gestaltung zeigt dabei ebenfalls in drei Darstellungen die Figur 7. In Darstellung a ist ein geschlossenes Ventil sowie in Darstellung b ein geöffnetes Ventil und in Darstellung c ein wieder geschlossenes Ventil gezeigt. Anders als in Figur 6 wird dabei das Verschlusselement 43 nicht verschoben sondern eine Öffnung eines Luftdurchlasses erfolgt lediglich durch elastische Verformung des Elements 43 in der Darstellung b der Figur 7, so dass die Luft seitlich am Element 43 vorbeiströmen kann. Liegt der Luftstrom nicht weiter an, wird das Element 43 in seine ursprüngliche Form zurückgeführt und verschließt den Luftdurchlass wiederum.

## Patentansprüche

1. Vorrichtung zum Abdichten von Luftreifen mittels Dichtflüssigkeit, umfassend einen Dichtflüssigkeitsbehälter (10) mit einer Lufteinlassöffnung (22) zum Anschluss an einen Kompressor (30) und einer Auslassöffnung (24) zum Austritt eines Luft-/Dichtflüssigkeitsgemisches in einen abzudichtenden Luftreifen (20), wobei der Dichtflüssigkeitsbehälter (10) mindestens zwei Kammern (16,18) aufweist, in denen miteinander reaktionsfähige Komponenten der Dichtflüssigkeit getrennt gelagert sind, wobei die Kammern (16,18) über ein verschlossenes Verbindungselement (26,28) voneinander getrennt sind, das über einen Druck und/oder einen Luftstrom von der Lufteinlassöffnung (22) zur Auslassöffnung (24) öffenbar ist, **dadurch gekennzeichnet, dass** das Verbindungselement (26,28) so ausgebildet ist, dass bei einem hinreichenden, vorgegebenen Druck vom Kompressor über die Lufteinlassöffnung das Verbindungselement (26,28) öffnet und der Dichtflüssigkeitsbehälter (10) so ausgebildet ist, dass die Luft von der ersten (16) in die zweite Kammer (18) strömt und von der zweiten Kammer (18) über die Auslassöffnung (24) in den Reifen, wobei der Dichtflüssigkeitsbehälter (10) so ausgebildet ist, dass die Komponenten des Dichtflüssigkeitsgemisches, insbesondere in der zweiten Kammer, gemischt werden.

2. Vorrichtung nach Anspruch 1, **dadurch gekennzeichnet, dass** es bei Kopplung von Dichtflüssigkeitsbehälter (10) und Kompressor (30) zu einer elastischen Verformung und einem Kraftschluss zwischen Kompressor (30) und Dichtbehälter kommt.

3. Vorrichtung nach Anspruch 2, **dadurch gekennzeichnet, dass** die elastische Verformung durch eine Bajonettspannführung oder eine Spannrampe, die mit einem Spannbolzen oder Spannzapfen zusammenwirkt, gebildet ist.

4. Vorrichtung nach einem der vorangehenden Ansprüche,
**dadurch gekennzeichnet, dass** die Dichtflüssigkeit einen Latex-Naturkautschuk-Anteil in einer der Kammern (16) umfasst und insbesondere der Latex-Naturkautschuk-Anteil weniger als 50 Gew.-%, insbesondere weniger 40 Gew.-%, insbesondere weniger als 30 Gew-% und insbesondere weniger als 25 Gew.-% und insbesondere weniger als 15 Gew.-% umfasst.

5. Vorrichtung nach einem der vorangehenden Ansprüche,
**dadurch gekennzeichnet, dass** die Dichtflüssigkeit mineralische und/oder synthetisches Fasern und/oder Partikel umfasst.

6. Vorrichtung nach einem der vorangehenden Ansprüche,
**dadurch gekennzeichnet, dass** die Dichtflüssigkeit Schaumadditive und/oder Verdampfungsmittel umfasst.

7. Vorrichtung nach einem der vorangehenden Ansprüche,
**dadurch gekennzeichnet, dass** der Dichtflüssigkeitsbehälter (10) mit seiner Lufteinlassöffnung (22) unmittelbar mit einem Luftauslass (32) eines Kompressors (30) koppelbar ist.

8. Vorrichtung nach einem der vorangehenden Ansprüche,
**dadurch gekennzeichnet, dass** die Auslassöffnung (24) mit einem durch den Luftstrom und/oder ein Anschlussmittel (12) zum Verbinden mit dem Luftreifen (20) im Anwendungsfall zerstörbaren Verschluss (21) verschlossen ist.

9. Vorrichtung nach einem der vorangehenden Ansprüche,
**dadurch gekennzeichnet, dass** der Verschluss (21) eine Sollbruchstelle aufweist.

10. Vorrichtung nach einem der vorangehenden Ansprüche,
**dadurch gekennzeichnet, dass** die Lufteinlassöffnung (22) ein Ventil (23) aufweist, das sich durch die Lufteinströmung aus dem Kompressor (30) in den Dichtflüssigkeitsbehälter (10) öffnet und beim Trennen des Dichtflüssigkeitsbehälters (10) vom Kompressor (30) verschließt.

11. Vorrichtung nach einem der vorangehenden Ansprüche,
**dadurch gekennzeichnet, dass** das Ventil (23) ein elastisch verformbares Element (43) aufweist, das in einem verformten Zustand den Weg für die Luft frei gibt.

12. Vorrichtung nach einem der vorangehenden Ansprüche,
**dadurch gekennzeichnet, dass** das elastisch verformbare Element (43) im Ventil verschieblich geführt ist zwischen einem kleineren Querschnitt, in dem das Ventil verschlossen ist und einem größeren Querschnitt (44) in dem das Ventil durch den Luftstrom geöffnet ist.

13. Vorrichtung nach einem der vorangehenden Ansprüche,
**dadurch gekennzeichnet, dass** im Kompressor (30) eine Kühleinrichtung (42) zur Kühlung des Luftstroms im Kompressor (30) vorgesehen ist.

14. Vorrichtung nach einem der vorangehenden Ansprüche,
**dadurch gekennzeichnet, dass** der
Dichtflüssigkeitsbehälter (10) im Spritzgussverfahren hergestellt ist.

## Claims

1. Device for sealing pneumatic tires by means of sealing liquid, comprising a sealing liquid container (10) having an air inlet opening (22) for connection to a compressor (30) and an outlet opening (24) for the discharge of an air/sealing liquid mixture into a pneumatic tire to be sealed (20), the sealing liquid container (10) having at least two chambers (16, 18) in which components of the sealing liquid that are reactive to one another are stored separately, the chambers (16, 18) being separated from one another by a closed connecting element (26, 28) which can be opened via a pressure and/or an air flow from the air inlet opening (22) to the outlet opening (24), **characterized in that** the connecting element (26, 28) is designed such that in the event of sufficient predetermined pressure from the compressor via the air inlet opening, the connecting element (26, 28) opens, and the sealing liquid container (10) is designed such that the air flows from the first chamber (16) into the second chamber (18) and from the second chamber (18) into the tire via the outlet opening (24), the sealing liquid container (10) being designed such that the components of the sealing liquid mixture, in particular in the second chamber, are mixed.

2. Device according to claim 1, **characterized in that** when the sealing liquid container (10) and the compressor (30) are coupled, there is elastic deformation and a frictional connection between the compressor (30) and the sealing container.

3. Device according to claim 2, **characterized in that** the elastic deformation is formed by a bayonet clamping guide or a clamping ramp which interacts with a clamping bolt or a clamping spigot.

4. Device according to any of the preceding claims,
**characterized in that** the sealing liquid comprises a latex-natural rubber proportion in one of the chambers (16) and in particular the latex-natural rubber proportion comprises less than 50 wt.%, in particular less than 40 wt.%, in particular less than 30 wt.% and in particular less than 25 wt.% and in particular less than 15 wt.%.

5. Device according to any of the preceding claims,
**characterized in that** the sealing liquid comprises mineral and/or synthetic fibers and/or particles.

6. Device according to any of the preceding claims,
**characterized in that** the sealing liquid comprises foam additives and/or evaporation agents.

7. Device according to any of the preceding claims,
**characterized in that** the air inlet opening (22) of the sealing liquid container (10) can be directly coupled to an air outlet (32) of a compressor (30).

8. Device according to any of the preceding claims,
**characterized in that** the outlet opening (24) is closed by means of a closure (21) which can be destroyed when in use by the air flow and/or a connection means (12) for connecting to the pneumatic tire (20).

9. Device according to any of the preceding claims,
**characterized in that** the closure (21) has a predetermined breaking point.

10. Device according to any of the preceding claims,
**characterized in that** the air inlet opening (22) has a valve (23) which opens due to the air inflow from the compressor (30) into the sealing liquid container (10) and closes when the sealing liquid container (10) is separated from the compressor (30).

11. Device according to any of the preceding claims,
**characterized in that** the valve (23) has an elastically deformable element (43) which, in a deformed state, opens the path for the air.

12. Device according to any of the preceding claims,
**characterized in that** the elastically deformable element (43) is displaceably guided in the valve between a smaller cross-section in which the valve is closed and a larger cross-section (44) in which the valve is opened by the air flow.

13. Device according to any of the preceding claims,
**characterized in that** a cooling device (42) for cooling the air flow in the compressor (30) is provided in the compressor (30).

14. Device according to any of the preceding claims,
**characterized in that** the sealing liquid container (10) is produced by injection molding.

## Revendications

1. Dispositif d'étanchéification de pneumatiques au moyen de fluide d'étanchéité, comprenant un récipient de fluide d'étanchéité (10) comprenant une ouverture d'entrée d'air (22) pour la connexion à un compresseur (30) et une ouverture de sortie (24) pour la sortie d'un mélange d'air et de fluide d'étanchéité dans un pneumatique (20) à étanchéifier, le récipient de fluide d'étanchéité (10) présentant au moins deux chambres (16, 18), dans lesquelles des composants mutuellement réactifs du fluide d'étanchéité sont stockés séparés, les chambres (16, 18) étant séparées l'une de l'autre au moyen d'un élément de connexion (26, 28) fermé, lequel peut être ouvert par une pression et/ou un flux d'air de l'ouverture d'entrée d'air (22) vers l'ouverture de sortie (24), **caractérisé en ce que** l'élément de connexion (26, 28) est conçu de telle façon que, en cas d'une pression suffisante prédéfinie provenant du compresseur à travers l'ouverture d'entrée d'air, l'élément de connexion (26, 28) s'ouvre et le récipient de fluide d'étanchéité (10) est conçu de telle façon que l'air s'écoule de la première chambre (16) dans la deuxième chambre (18) et de la deuxième chambre (18) à travers l'ouverture de sortie (24) dans les pneumatiques, le récipient de fluide d'étanchéité (10) étant conçu de telle façon que les composants du mélange de fluide d'étanchéité sont mélangés, en particulier dans la deuxième chambre.

2. Dispositif selon la revendication 1, **caractérisé en ce que**, lors du couplage du récipient de fluide d'étanchéité (10) et du compresseur (30), il se produit une déformation élastique et une adhérence entre le compresseur (30) et le récipient de fluide d'étanchéité.

3. Dispositif selon la revendication 2, **caractérisé en ce que** la déformation élastique est formée par un guide de serrage à baïonnette ou une rampe de tension, qui interagit avec un boulon de serrage ou un tenon de serrage.

4. Dispositif selon l'une quelconque des revendications précédentes, **caractérisé en ce que** le fluide d'étanchéité comprend une part de latex de caoutchouc naturel dans l'une des chambres (16) inférieure à 50 % en poids, en particulier inférieure à 40 % en poids, en particulier inférieure à 30 % en poids et en particulier inférieure à 25 % en poids et en particulier inférieure à 15 % en poids.

5. Dispositif selon l'une quelconque des revendications précédentes, **caractérisé en ce que** le fluide d'étanchéité comprend des fibres minérales et/ou synthétiques et/ou des particules.

6. Dispositif selon l'une quelconque des revendications précédentes, **caractérisé en ce que** le fluide d'étanchéité comprend des additifs moussants et/ou des agents de vaporisation.

7. Dispositif selon l'une quelconque des revendications précédentes, **caractérisé en ce que** le récipient de fluide d'étanchéité (10) peut être couplé par son ouverture d'entrée d'air (22) directement à une sortie d'air (32) d'un compresseur (30).

8. Dispositif selon l'une quelconque des revendications précédentes, **caractérisé en ce que** l'ouverture de sortie (24) est fermée au moyen d'un bouchon (21) pouvant être détruit en cas d'utilisation par le flux d'air et/ou un moyen de connexion (12) pour la connexion au pneumatique (20).

9. Dispositif selon l'une quelconque des revendications précédentes, **caractérisé en ce que** le bouchon (21) présente un point destiné à la rupture.

10. Dispositif selon l'une quelconque des revendications précédentes, **caractérisé en ce que** l'ouverture d'entrée d'air (22) présente une soupape (23), qui s'ouvre en raison de l'arrivée d'air provenant du compresseur (30) dans le récipient de fluide d'étanchéité (10) et qui se ferme lors de la séparation du récipient de fluide d'étanchéité (10) du compresseur (30).

11. Dispositif selon l'une quelconque des revendications précédentes, **caractérisé en ce que** la soupape (23) présente un élément déformable élastiquement (43), qui libère, à l'état déformé, le chemin pour l'air.

12. Dispositif selon l'une quelconque des revendications précédentes, **caractérisé en ce que** l'élément déformable élastiquement (43) est guidé de manière mobile dans la soupape entre une coupe transversale plus petite, dans laquelle la soupape est fermée, et une coupe transversale plus grande (44), dans laquelle la soupape est ouverte par le flux d'air.

13. Dispositif selon l'une quelconque des revendications précédentes, **caractérisé en ce que** le compresseur (30) est muni d'un dispositif de refroidissement (42) pour le refroidissement du flux d'air dans le compresseur (30) .

14. Dispositif selon l'une quelconque des revendications précédentes, **caractérisé en ce que** le récipient de fluide d'étanchéité (10) est fabriqué par moulage par injection.
